# EUROPEAN PATENT APPLICATION

(11) **EP 4 660 893 A1**
(43) Date of publication of application: **10.12.2025**
(21) Application number: 23919846.8
(22) Date of filing: 16.10.2023
(51) Int. Cl.: G06N 5/022, G06F 16/28

(54) **COMPUTER AND KNOWLEDGE EXTRACTION METHOD**

(30) Priority: 02.02.2023 JP 2023014586
(71) Applicant: Hitachi, Ltd., Tokyo 100-8280 (JP)
(72) Inventor: MUTO Kazuo, Tokyo 100-8280 (JP)
(74) Representative: Mewburn Ellis LLP
(86) International application number: PCT/JP2023/037409
(87) International publication number: WO 2024/161710

(57) **Abstract**

The computer receives as an input a knowledge graph representing knowledge extracted from a document including a character string and an image and stores a model for reproducing the knowledge graph. The computer extracts, upon receiving a new document, knowledge from the new document, generates the knowledge graph of the extracted knowledge, acquires a reproduced knowledge graph by inputting the extracted knowledge graph to the model, calculates, based on a difference between the extracted knowledge graph and the reproduced knowledge graph, a difference degree representing a degree of difference of the extracted knowledge from the knowledge corresponding to the knowledge graph used for generating the model, and outputs verification information including the difference degree.

## Description

### Cross-Reference to Related Application

The present application claims the priority of Japanese Patent Application No. 2023-14586 filed on February 2, 2023, the entire contents of which are incorporated herein by reference.

### Technical Field

The present invention relates to a technique for extracting useful knowledge from documents such as patents and papers.

### Background Art

Published documents such as patents and papers describe knowledge based on the latest research result. Therefore, by using the knowledge described in the document, it is possible to grasp a research trend, perform analysis based on the latest data, and the like. For example, for the purpose of developing a new material, a statistical model for predicting characteristics of the new material can be generated by utilizing experimental data described in a document.

The document is unstructured data including a natural sentence, a diagram, a table, and the like. Therefore, in order to extract knowledge from a document such as a patent or a paper, a person needs to read the document and extract necessary knowledge. Since the work is fairly time-consuming and the number of documents to be accumulated is increasing day by day, it is difficult to check all documents.

Therefore, there is a demand for a technique for automatically extracting knowledge from a document. On the other hand, a method for automatically extracting useful knowledge from a document using rule-based or machine learning is proposed, such as NPL 1.

### Citation List

### Patent Literature

PTL 1: US2020/0125659

### Non Patent Literature

NPL 1: Swain, M. C., & Cole, J. M. "ChemDataExtractor: A Toolkit for Automated Extraction of Chemical Information from the Scientific Literature", J. Chem. Inf. Model. 2016, 56 (10), pp 1894-1904 10.1021/acs. jcim. 6b00207
NPL 2: Ding, Kaize, et al. "Deep anomaly detection on attributed networks.", Proceedings of the 2019 SIAM International Conference on Data Mining. Society for Industrial and Applied Mathematics, 2019.

### Summary of Invention

### Technical Problem

By using the technique in the related art, knowledge can be automatically extracted from a document. However, in the related art, it is difficult to determine an error of the extracted knowledge and usefulness of the extracted knowledge.

Meanwhile, PTL 1 discloses a technique for ensuring extraction accuracy. Specifically, a query to a DB in which business data is accumulated is created from the extracted business rule. Further, validity of the extracted business rule is verified using the number or ratio of data hit in the query as an index.

The technique described in PTL 1 is based on the premise that there is business data that matches an extracted business rule. Therefore, PTL 1 is effective, for example, in a case in which business based on a determined rule is performed and data created as a result of the business is accumulated in a DB. However, in a case in which novelty is required as in research results, data that strictly matches knowledge extracted from a sentence such as a patent or a paper that is the result is not present in the DB, and thus the technique of PTL 1 cannot be applied.

An object of the invention is to provide a knowledge extraction technique for presenting information for determining an error of knowledge extracted from a document and usefulness thereof.

### Solution to Problem

A representative example of the invention disclosed in the present application is as follows. That is, a computer includes: a calculation device; and a storage device connected to the calculation device. The computer receives as an input a knowledge graph representing knowledge extracted from a document including a character string and an image and stores a model for reproducing the knowledge graph, and the knowledge graph includes two or more nodes and one or more edges, the computer extracts, upon receiving a new document, knowledge from the new document, generates the knowledge graph of the extracted knowledge as an extracted knowledge graph, acquires a reproduced knowledge graph by inputting the extracted knowledge graph to the model, calculates, based on a difference between the extracted knowledge graph and the reproduced knowledge graph, a difference degree representing a degree of difference of the extracted knowledge from the knowledge corresponding to the knowledge graph used for generating the model, and outputs verification information including the difference degree.

### Advantageous Effects of Invention

According to an aspect of the invention, it is possible to present information for determining an error of knowledge extracted from a document and usefulness thereof. Problems, configurations, and effects other than those described above will be clarified by description of the following embodiments.

### Brief Description of Drawings

FIG. 1 is a diagram showing an example of a configuration of a knowledge extraction device according to Embodiment 1.
FIG. 2 is a diagram showing a flow of processing executed by the knowledge extraction device according to Embodiment 1.
FIG. 3 is a diagram showing an example of a knowledge graph stored in a knowledge database according to Embodiment 1.
FIG. 4 is a diagram showing an example of a reference knowledge graph generated by a reference knowledge graph generation unit according to Embodiment 1.
FIG. 5 is a diagram showing an example of a knowledge graph generated by a knowledge extraction unit according to Embodiment 1.
FIG. 6 is a diagram showing an example of a target knowledge graph generated by a target knowledge graph generation unit according to Embodiment 1.
FIG. 7 is a diagram showing an example of a screen presented by a knowledge presentation unit according to Embodiment 1.
FIG. 8 is a flowchart showing an example of a knowledge model generation process executed by the knowledge extraction device according to Embodiment 1.
FIG. 9 is a flowchart showing an example of a knowledge verification process executed by the knowledge extraction device according to Embodiment 1.
FIG. 10 is a diagram showing an example of a configuration of a knowledge extraction device according to Embodiment 2.
FIG. 11 is a diagram showing a flow of a process executed by the knowledge extraction device according to Embodiment 2.
FIG. 12 is a diagram showing an example of a configuration of a knowledge extraction device according to Embodiment 3.
FIG. 13 is a diagram showing a flow of a process executed by the knowledge extraction device according to Embodiment 3.

### Description of Embodiments

Hereinafter, embodiments of the invention will be described with reference to the drawings. However, the invention is not to be construed as being limited to the description of the following embodiment. It will be easily understood by those skilled in the art that a specific configuration can be changed without departing from the spirit or scope of the invention.

In the configurations of the invention described below, the same or similar configurations or functions are denoted by the same reference signs, and a redundant description thereof will be omitted.

### [Embodiment 1]

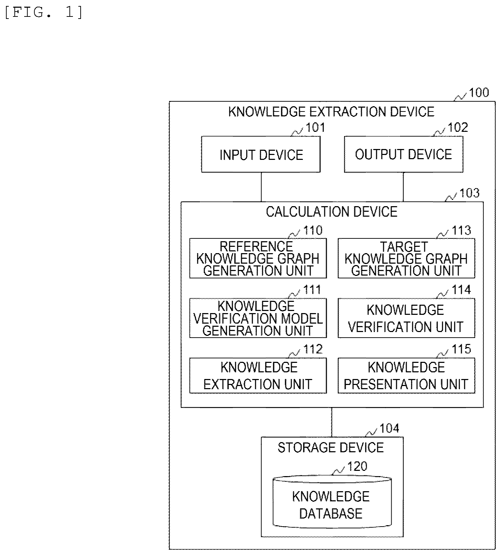

FIG. 1 is a diagram showing an example of a configuration of a knowledge extraction device according to Embodiment 1.

A knowledge extraction device 100 includes an input device 101, an output device 102, a calculation device 103, and a storage device 104.

The input device 101 is a keyboard, a mouse, a touch panel, or the like, and receives input of data, commands, and the like from a user.

The output device 102 is a display or the like, and displays a screen for performing interactive processing with the knowledge extraction device 100.

The calculation device 103 is a central processing unit (CPU) or the like, and executes various information processes of the knowledge extraction device 100. The calculation device 103 operates as a functional unit (module) that achieves a specific function by executing processes according to a program stored in the storage device 104. The calculation device 103 according to Embodiment 1 functions as a reference knowledge graph generation unit 110, a knowledge verification model generation unit 111, a knowledge extraction unit 112, a target knowledge graph generation unit 113, a knowledge verification unit 114, and a knowledge presentation unit 115.

The storage device 104 is a storage device such as a memory, and stores a program executed by the calculation device 103 and information used by the program. The storage device 104 is also used as a work area. The knowledge extraction device 100 may include a large-capacity storage device such as a hard disk drive (HDD) and a solid state drive (SSD). The storage device 104 according to Embodiment 1 stores a knowledge database 120.

Functions of the knowledge extraction device 100 may be achieved using a plurality of computers.

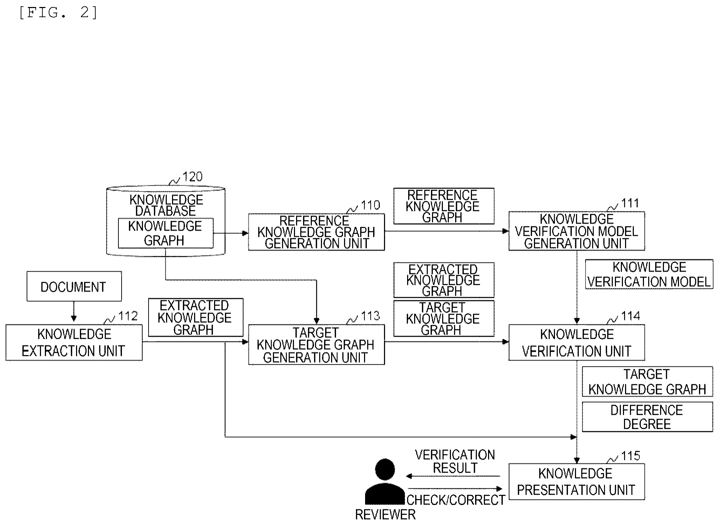

Next, a flow of a process executed by the knowledge extraction device 100 according to Embodiment 1 will be described. FIG. 2 is a diagram showing a flow of a process executed by the knowledge extraction device 100 according to Embodiment 1.

The knowledge extraction device 100 generates a knowledge verification model using the knowledge database 120. Upon receiving an input of a document, the knowledge extraction device 100 extracts knowledge from the document, verifies the knowledge using the knowledge verification model, and presents a verification result to a reviewer.

The knowledge database 120 accumulates knowledge as a knowledge graph such as a resource description framework and a property graph.

The knowledge graph is a graph including nodes representing entities and edges representing relationships between the entities. Nodes are assigned labels that represent types of entities and attributes of the entities as information representing characteristics of the entities that make up the knowledge, and edges are assigned labels that represent a type of relationship and attributes of the relationship as information representing the characteristics of the relationship between the entities. It is assumed that the knowledge database 120 according to Embodiment 1 stores a knowledge graph manually created and verified, such as a material database published on the Internet.

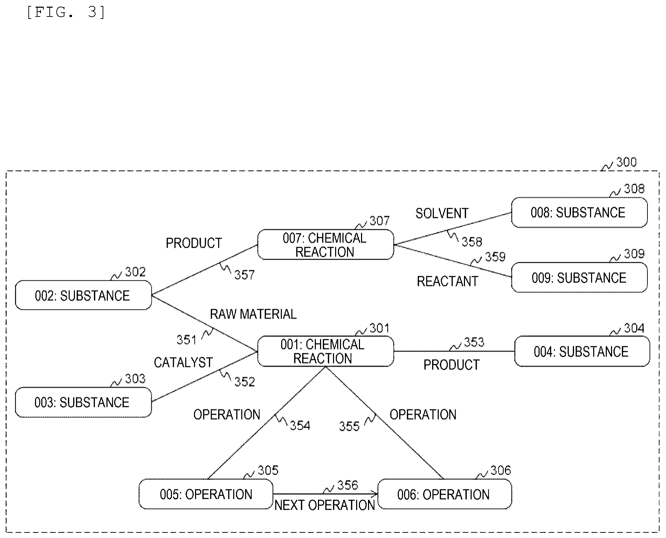

FIG. 3 is a diagram showing an example of a knowledge graph stored in the knowledge database 120 according to Embodiment 1.

A knowledge graph 300 shown in FIG. 3 is a knowledge graph in which knowledge related to a chemical reaction is expressed in the form of the property graph. The knowledge graph 300 includes nodes 301, 302, 303, 304, 305, 306, 307, 308, and 309, and edges 351, 352, 353, 354, 355, 356, 357, 358, and 359.

An identifier and a label representing a concept of the node are assigned to the node. For example, a node identifier "001" and a label "substance" representing a concept corresponding to the node 301 are assigned to the node 301. A label indicating a relationship between nodes is assigned to the edge. For example, a label "raw material" is assigned to an edge 351, and a label "catalyst" is assigned to an edge 352.

In addition, an attribute can be assigned to a node. For example, in the case of a node labeled as "substance", information on a name and an identifier of the substance such as an international chemical identifier, a substance name, and its synonym, information indicating a structure of the substance such as a chemical composition formula and a simplified molecular input line entry system (SMIELS), and information indicating characteristics of the substance such as a melting point can be assigned. In addition, in a case of a node to which a label of "operation" is attached, information regarding a type of operation such as stirring and heating, and conditions for the operation such as a temperature, a pressure, and a time can be assigned as the attribute.

The attribute can also be assigned to the edge. For example, a mass or the like of the substance corresponding to the node 302 used as the raw material in a chemical reaction corresponding to the node 301 can be assigned to the edge 351 as the attribute.

The reference knowledge graph generation unit 110 converts the knowledge graph stored in the knowledge database 120 into a reference knowledge graph. The reference knowledge graph is a graph used to generate a knowledge verification model described later. The reference knowledge graph generation unit 110 extracts information necessary for generating a knowledge verification model based on the knowledge graph, and converts the information into the reference knowledge graph.

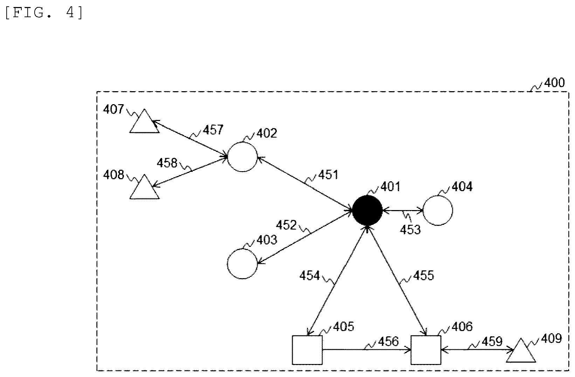

FIG. 4 is a diagram showing an example of the reference knowledge graph generated by the reference knowledge graph generation unit 110 according to Embodiment 1. FIG. 4 shows a reference knowledge graph 400 generated based on the knowledge graph 300 described in FIG. 3.

The reference knowledge graph generation unit 110 generates the reference knowledge graph 400 based on the knowledge graph 300 as in the following procedure.

First, the reference knowledge graph generation unit 110 extracts the node related to the chemical reaction corresponding to the node 301. Specifically, the reference knowledge graph generation unit 110 extracts the nodes 302, 303, 304, 305, and 306.

The knowledge graph may include a plurality of pieces of knowledge. Therefore, the reference knowledge graph generation unit 110 divides the knowledge graph into predetermined division units, and generates the reference knowledge graph based on the divided graphs.

The reference knowledge graph generation unit 110 defines a node corresponding to the extracted node as a node of the reference knowledge graph. At this time, the reference knowledge graph generation unit 110 defines attributes such as characteristics of a substance such as a melting point and an operation condition such as a pressure as other nodes. For example, when 120 degrees is assigned as the melting point of the substance corresponding to the node 302, the reference knowledge graph generation unit 110 defines a node corresponding to "melting point, 120 degrees". Finally, the reference knowledge graph generation unit 110 assigns to each node a feature corresponding to the type of node.

In the reference knowledge graph 400 shown in FIG. 4, nodes 401, 402, 403, 404, 405, and 406 correspond to the nodes 301, 302, 303, 304, 305, and 306 in the knowledge graph 300. Nodes 407 and 408 are nodes representing numerical values related to the characteristics of the substance corresponding to the node 302, and a node 409 is a node representing a numerical value related to the operation condition corresponding to the node 306.

In the reference knowledge graph 400 shown in FIG. 4, there are four types of nodes of chemical reaction, substance, numerical value, and operation, and the node 401 corresponds to a chemical reaction node, the nodes 402, 403, and 404 correspond to substance nodes, the nodes 405 and 406 correspond to operation nodes, and the nodes 408 and 409 correspond to numerical value nodes.

Each node is assigned a feature, which is a fixed-length vector according to its type. Specifically, in the case of the node related to a substance, a fixed-length vector called a fingerprint is calculated based on information related to a structure of the substance or the like, and is used as a feature together with a bit string representing a role of the substance during a chemical reaction. In the case of the node related to the operation, the type of the operation is converted into a bit string to obtain a fixed-length vector. In the case of the node related to the numerical value, the meaning of the numerical value such as a melting point and a temperature, a related substance, and a relationship with an operation are converted into a bit string and are used as a feature value together with the numerical value. In the case of the node related to the chemical reaction, a bit string converted from the type of chemical reaction such as a polymerization reaction is used as a feature. For example, one-hot encoding is used for the conversion into the bit string.

The knowledge verification model generation unit 111 generates a knowledge verification model using the reference knowledge graph. For example, the knowledge verification model generation unit 111 generates, as the knowledge verification model, a graph autoencoder capable of reconstructing the reference knowledge graph as disclosed in NPL 2 by using the reference knowledge graph. Various forms of the graph autoencoder are conceivable, and for example, a graph autoencoder that inputs features of an adjacency matrix and a node of a reference knowledge graph and reconstructs the features is exemplified.

The knowledge verification model is a model that reproduces a reference knowledge graph representing knowledge. That is, the knowledge verification model is a model that incorporates the knowledge represented by the reference knowledge graph as its own knowledge.

The knowledge extraction unit 112 extracts knowledge from a document including a natural sentence, a diagram, and a table, generates a knowledge graph representing the extracted knowledge, and outputs the knowledge graph as an extracted knowledge graph. Specifically, the extracted knowledge graph is generated in the following procedure.

The knowledge extraction unit 112 utilizes a known natural language processing method such as named entity extraction and relationship extraction to extract types of words and relationships between words described in a document. The knowledge extraction unit 112 extracts numerical values from a drawing, a table, and the like of a document using a known image processing method. Then, the knowledge extraction unit 112 generates, based on the extracted words and numerical values and the relationship, a knowledge graph in the same data format as the knowledge graph stored in the knowledge database 120. Here, the knowledge graph having the same data format means a knowledge graph having the same type of label and attribute assigned to the node and the edge.

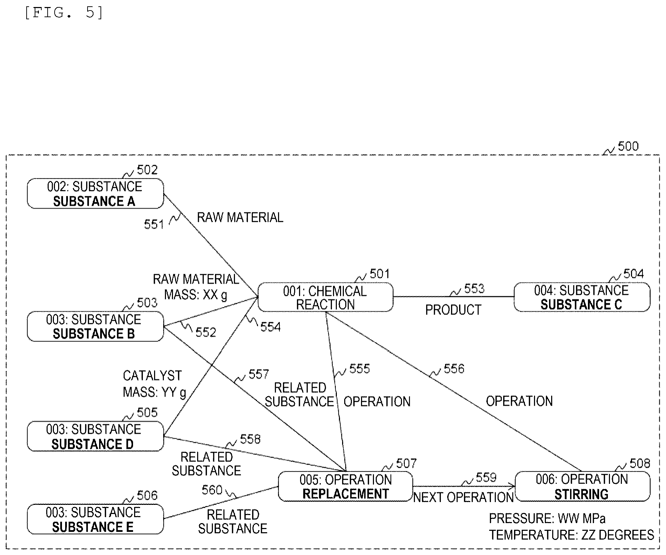

Here, a specific method for generating the extracted knowledge graph will be described for the following sentence regarding a chemical reaction: "Substance C was synthesized from substances A and B. Specifically, a substance B (XX g) and a substance D (YY g) were placed in a heat-resistant reaction vessel provided with a stirrer, and after sufficient replacement with a substance E, the vessel was heated to ZZ degrees while stirring while maintaining a pressure inside the vessel at WW MPa." FIG. 5 is a diagram showing an example of the knowledge graph generated by the knowledge extraction unit 112 according to Embodiment 1.

The knowledge extraction unit 112 extracts, from the sentence, a "substance A", a "substance B", a "substance C", a "substance D", and a "substance E" as words representing substances, "replacement" and "stirring" as words representing operations, "XX g" and "YY g" as words representing masses, "WW MPa" as words representing a pressure, and "ZZ degree" as words representing a temperature. The knowledge extraction unit 112 extracts a relationship between the extracted words. For example, "XX g" is the mass of "substance B", "YY g" is the mass of "substance D", substances related to "replacement" are "substance B," "substance D," and "substance E," stirring conditions are "WW MPa," "ZZ degree," and the like, which are extracted as relationships between words. The knowledge extraction unit 112 uses the extracted information to generate an extracted knowledge graph 500 representing knowledge included in the sentence as shown in FIG. 5. The extracted knowledge graph 500 includes nodes 501, 502, 503, 504, 506, 507, and 508 and edges 551, 552, 553, 554, 555, 556, 557, 558, 559, and 560.

A node identifier, a node label, words in a corresponding sentence, and the like are assigned to each node of the extracted knowledge graph 500. Although not described in the above sentence, it can be understood that there is an entity of a chemical reaction. Therefore, in FIG. 5, the node 501 corresponding to the chemical reaction described in the above sentence is added, and the association between the node and the node extracted from the words in the sentence is also added. For example, since the "substance A" is used as the "raw material" during the chemical reaction, the label "raw material" is assigned to the edge 551 between the node 501 and the node 502 representing the "substance A". During the chemical reaction, XX g of the "substance B" is used as the raw material, and YY g of the substance D is used as the catalyst, and thus the edge 552 between the node 501 and the node 503 representing the "substance B" is assigned with the label "raw material" and the attribute "mass: XX g", and the edge 554 between the node 501 and the node 505 representing the substance D is assigned with the label "catalyst" and the attribute "mass: YY g".

The target knowledge graph generation unit 113 adds an attribute or the like to each node of the extracted knowledge graph with reference to a knowledge graph, another DB, or the like stored in the knowledge database 120 as necessary. The target knowledge graph generation unit 113 converts the extracted knowledge graph into a target knowledge graph having the same data format as the reference knowledge graph. The method for generating the target knowledge graph is the same as the method for generating the reference knowledge graph.

The addition of attributes to the extracted knowledge graph 500 shown in FIG. 5 is performed, for example, as follows.

In the addition of the attribute to the node related to the substance, the target knowledge graph generation unit 113 refers to the knowledge database 120 based on the expression of the substance such as the substance A or the substance B in the sentence, and searches for the node corresponding to the same substance. In the search for nodes corresponding to the same substance, information on substance names and identifiers in the knowledge graph of the knowledge database 120 is used. When there is a node corresponding to the same substance, the target knowledge graph generation unit 113 adds, as the attribute, information or the like regarding the structure of the substance of the searched node to the corresponding node of the extracted knowledge graph.

When the structure of a substance is uniquely determined from a description in the sentence, such as a naming method of a compound defined by International Union of Pure and Applied Chemistry, the structure may be estimated based on an expression in the sentence and added as an attribute of a corresponding node in the extracted knowledge graph.

In the addition of an attribute to a node related to an operation, for example, the target knowledge graph generation unit 113 refers to information related to a type of a predefined operation such as gas replacement or stirring, and identifies the type of the operation based on an expression of the operation in a sentence such as replacement or stirring. The identification can also be achieved using a thesaurus, a pre-trained machine learning model, and the like. The target knowledge graph generation unit 113 adds the type of the characterized operation as an attribute to a node related to the operation.

After the addition of the attribute to the node of the extracted knowledge graph is executed, the target knowledge graph generation unit 113 extracts the node from the extracted knowledge graph by the same processing method as that of the reference knowledge graph generation unit 110, and generates the target knowledge graph by assigning a feature expressed by a fixed-length vector according to the type to each extracted node.

For a substance whose operation type cannot be identified or whose operation or structure cannot be identified from the knowledge database 120, an external DB, and the expression in the sentence, an identifier that can determine that the operation or the structure cannot be identified is assigned to the corresponding node.

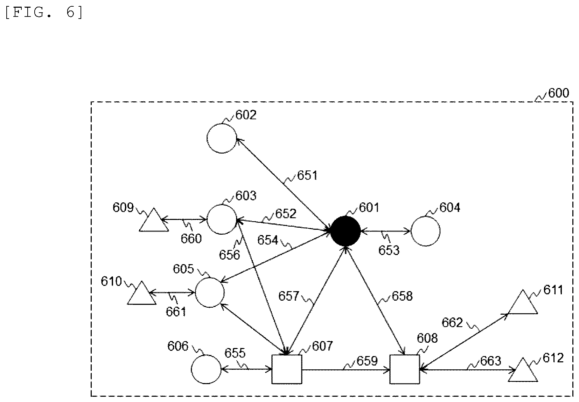

FIG. 6 is a diagram showing an example of the target knowledge graph generated by the target knowledge graph generation unit 113 according to Embodiment 1. FIG. 6 shows a target knowledge graph 600 generated from the extracted knowledge graph 500 described in FIG. 5. The target knowledge graph 600 is a graph having the same data format as the reference knowledge graph 400 shown in FIG. 4.

The target knowledge graph 600 includes nodes 601, 602, 603, 604, 606, 607, 608, 609, 610, 611, and 612 and edges 651, 652, 653, 654, 655, 656, 657, 658, 659, 660, 661, 662, and 663.

The nodes 601, 602, 603, 604, 605, 606, 607, and 608 of the target knowledge graph 600 correspond to the nodes 501, 502, 503, 504, 505, 506, 507, and 508 of the extracted knowledge graph 500. A node 609 represents a mass of the substance B corresponding to the node 503, and a node 610 represents a mass of the substance C corresponding to the node 505. Nodes 611 and 612 are nodes representing a pressure and a temperature which are stirring conditions corresponding to the node 508. A fixed-length vector according to the type is assigned to each node as a feature.

The knowledge verification unit 114 reconstructs the feature of each node of the input target knowledge graph using the knowledge verification model, and calculates a difference degree of the feature of each node based on a reconstruction error between the feature of each node of the input target knowledge graph and the reconstructed feature of each node. The knowledge verification unit 114 outputs the target knowledge graph and the difference degree to the knowledge presentation unit 115.

The knowledge verification model is a model that reproduces a reference knowledge graph representing knowledge. That is, the knowledge verification model is a model that incorporates the knowledge represented by the reference knowledge graph as its own knowledge. When knowledge similar to the input target knowledge graph is incorporated into the knowledge verification model, a difference between the input knowledge graph and the output knowledge graph is small. When the knowledge corresponding to the input target knowledge graph includes information different from the knowledge incorporated into the knowledge verification model, the difference between the input knowledge graph and the output knowledge graph increases.

Therefore, the degree of difference representing a magnitude of the difference described above can be used as a value representing a difference degree of knowledge extracted from a document with respect to existing knowledge.

For example, a case in which an autoencoder that receives an adjacency matrix and a feature vector of a node of the reference knowledge graph as input and reconstructs the feature is generated as the knowledge verification model is considered. In this case, the knowledge verification unit 114 inputs the adjacency matrix of the target knowledge graph and the feature vector of each node to the knowledge verification model. The knowledge verification model outputs the reconstructed feature vector of each node. The knowledge verification unit 114 calculates a norm or the like of a difference between the input feature vector and the reconstructed feature vector as the difference degree. For a node to which a feature is not assigned, the feature of the node is estimated by ignoring the node or from surrounding nodes.

The knowledge presentation unit 115 generates verification information including the target knowledge graph and the difference degree, and presents the verification information to a reviewer via the output device 102. At this time, the knowledge presentation unit 115 may extract a node having a large difference degree and highlight the node. The reviewer can grasp the difference between the extracted knowledge and the existing knowledge by referring to the difference degree together with the target knowledge graph. For example, an error or novelty of the extracted knowledge can be grasped.

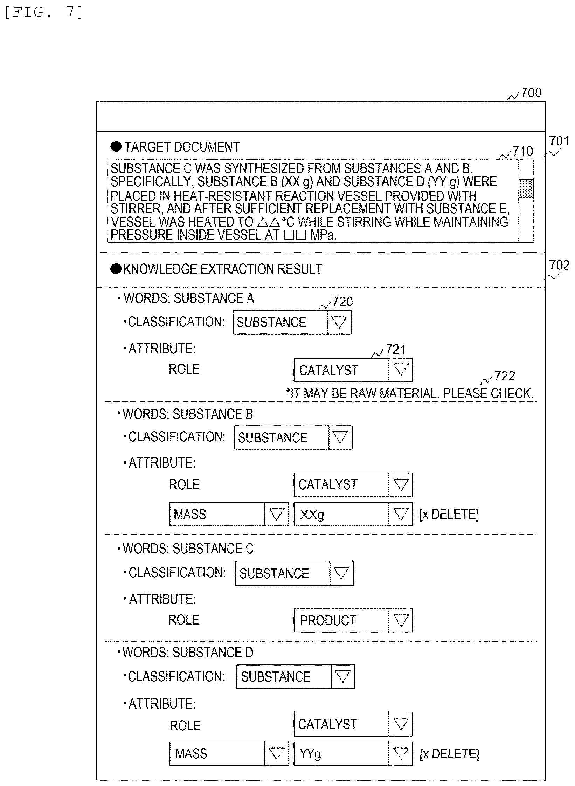

FIG. 7 is a diagram showing an example of a screen presented by the knowledge presentation unit 115 according to Embodiment 1. A screen 700 includes a document display area 701 and a knowledge display area 702.

The document display area 701 is an area for displaying information on an input document. The document display area 701 in FIG. 7 includes a display field 710 for displaying a target sentence.

The knowledge display area 702 is an area for displaying information on knowledge extracted from a document. In the knowledge display area 702 of FIG. 7, knowledge extracted from the sentence displayed in the display field 710 is displayed.

Display in the display field 710 is performed based on the input document (document). Display in the knowledge display area 702 is performed based on the extracted knowledge graph, the target knowledge graph, and the difference degree. The sentence and knowledge displayed on the screen 700 are the same as the extracted knowledge graph 500 and the target knowledge graph 600 shown in FIGS. 5 and 6.

The screen 700 allows the reviewer to change an extraction result as necessary. For example, although the words "substance A" in the sentence is recognized as "substance", the reviewer can operate a pull-down 720 to correct the words to another type, such as the operation. Similarly, the role of "substance A" during the chemical reaction is recognized as the "catalyst", and can be corrected to another role such as a raw material by operating a pull-down 721. In addition, "XX g" is recognized as the mass of the substance B, and can be deleted and changed to the mass of the substance C instead.

In FIG. 7, the knowledge presentation unit 115 performs display for prompting checking and correction of an item corresponding to a node having a large difference degree. For example, when the role of the substance A is recognized as the "catalyst" but the difference degree is large, a message is displayed near a field for displaying a recognition result of the role of the substance A. In addition, a message 722 indicating a role of decreasing the difference degree may be displayed. The message 722 suggests that the role of the substance A having a small difference degree is the raw material.

Next, details of a process to be executed by the knowledge extraction device 100 will be described.

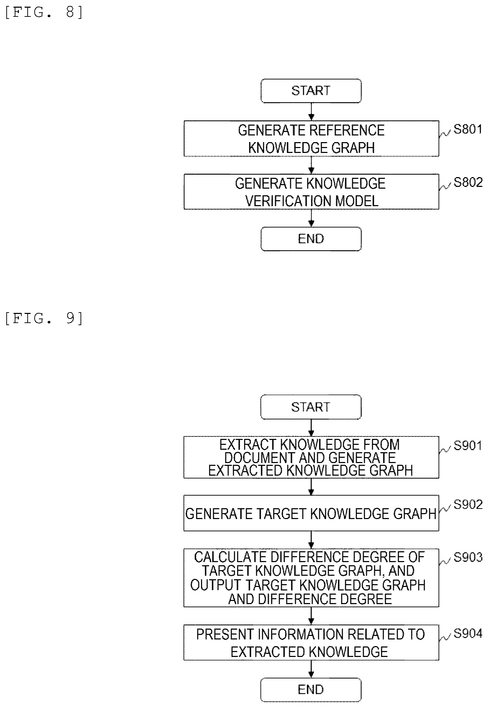

FIG. 8 is a flowchart showing an example of a knowledge model generation process executed by the knowledge extraction device 100 according to Embodiment 1.

The reference knowledge graph generation unit 110 generates a reference knowledge graph using a knowledge graph stored in the knowledge database 120 (step S801).

The knowledge verification model generation unit 111 generates a knowledge verification model using the reference knowledge graph (step S802). The knowledge verification model is generated using a known machine learning method.

FIG. 9 is a flowchart showing an example of a knowledge verification process executed by the knowledge extraction device 100 according to Embodiment 1. When an input of a document is received, the knowledge extraction device 100 starts the knowledge extraction process.

The knowledge extraction unit 112 extracts knowledge from the received document and generates an extracted knowledge graph (step S901). The knowledge extraction unit 112 outputs the extracted knowledge graph to the target knowledge graph generation unit 113 and the knowledge presentation unit 115.

The target knowledge graph generation unit 113 generates a target knowledge graph using the extracted knowledge graph (step S902). The target knowledge graph generation unit 113 refers to the knowledge database as necessary.

The knowledge verification unit 114 calculates the difference degree in the target knowledge graph using a knowledge verification model, and outputs the target knowledge graph and the difference degree to the knowledge presentation unit 115 (step S903). When a plurality of target knowledge graphs are generated based on the extracted knowledge graph, the process of step S903 is executed for each target knowledge graph. When the difference degree of the target knowledge graph is equal to or less than a certain standard, the difference degree may not be presented.

The knowledge presentation unit 115 presents information on the extracted knowledge based on the extracted knowledge graph, the target knowledge graph, and the difference degree (step S904).

According to Embodiment 1, the knowledge extraction device 100 can quantitatively evaluate a degree to which the knowledge extracted from the document differs from the existing knowledge, and present information including an evaluation result to the user. The user can grasp an error and usefulness of the extracted knowledge by referring to the information.

For example, even when extraction accuracy of knowledge is low, it is possible to acquire high-quality knowledge by grasping and correcting an error in the extracted knowledge.

### [Embodiment 2]

The knowledge extraction device 100 according to Embodiment 2 acquires a knowledge graph from the outside and stores the knowledge graph in the knowledge database 120. Hereinafter, Embodiment 2 will be described focusing on a difference from Embodiment 1.

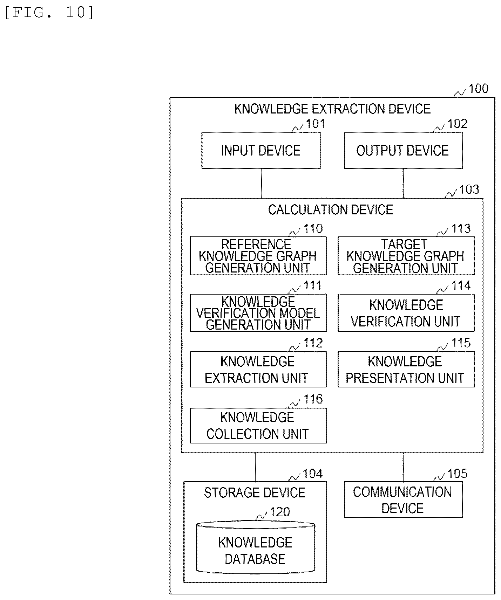

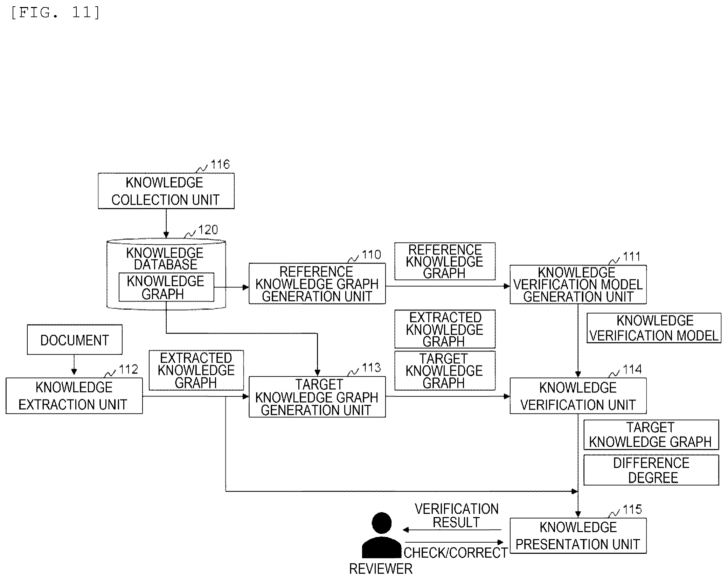

FIG. 10 is a diagram showing an example of a configuration of a knowledge extraction device according to Embodiment 2. FIG. 11 is a diagram showing a flow of a process executed by the knowledge extraction device 100 according to Embodiment 2.

The knowledge extraction device 100 according to Embodiment 2 newly includes a communication device 105. The communication device 105 is connected to the outside via a network such as the Internet, transmits processing contents of the calculation device 103, and receives information from the outside.

The calculation device 103 according to Embodiment 2 newly functions as a knowledge collection unit 116. The knowledge collection unit 116 collects knowledge graphs from a database or the like published on the Internet via the communication device 105, and stores the knowledge graphs in the knowledge database 120. When there is no information in the form of the knowledge graph, knowledge acquired by the knowledge extraction unit 112 or the like may be converted into the knowledge graph and stored in the knowledge database 120.

The knowledge (knowledge graph) may be collected from the outside when a knowledge verification model is generated or when a knowledge verification process is executed, or may be executed at an execution timing independent of the above-described process.

### [Embodiment 3]

The knowledge extraction device 100 according to Embodiment 3 converts a target knowledge graph checked by a reviewer into a knowledge graph in a data format that can be stored in the knowledge database 120, and stores the knowledge graph. Hereinafter, Embodiment 3 will be described focusing on a difference from Embodiment 1.

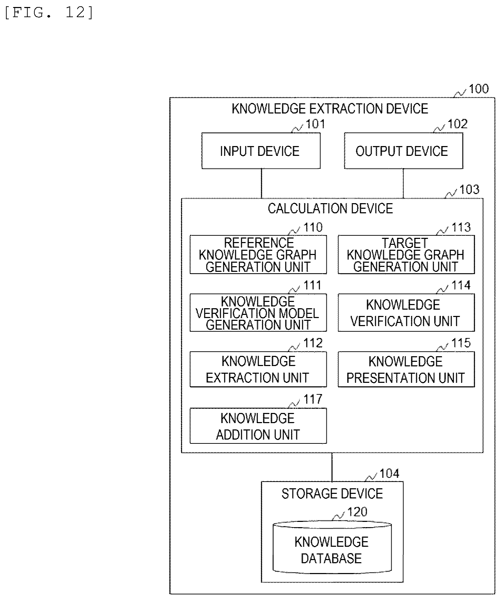

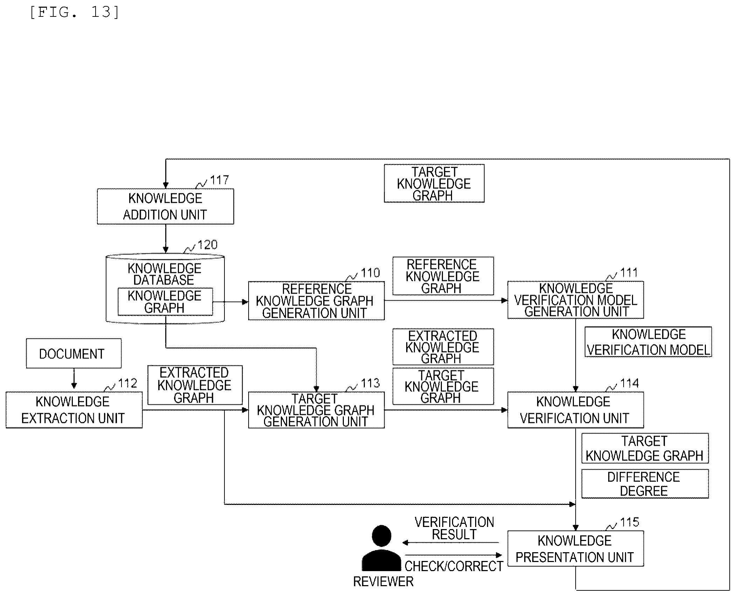

FIG. 12 is a diagram showing an example of a configuration of a knowledge extraction device according to Embodiment 3. FIG. 13 is a diagram showing a flow of a process executed by the knowledge extraction device 100 according to Embodiment 3.

A hardware configuration of the knowledge extraction device 100 according to Embodiment 3 is the same as that in Embodiment 1. The calculation device 103 according to Embodiment 3 newly functions as a knowledge addition unit 117.

The knowledge addition unit 117 converts a target knowledge graph checked and corrected by a reviewer into a knowledge graph in a data format that can be stored in the knowledge database 120, and stores the knowledge graph.

The invention is not limited to the embodiments described above, and includes various modifications. For example, the embodiments described above are described in detail to facilitate understanding of the invention, and the invention is not necessarily limited to those including all the described configurations. A part of a configuration in each embodiment may be added to, deleted from, or replaced with another configuration.

A part or all of the configurations, functions, processing units, processing methods, and the like described above may be implemented by hardware by, for example, designing with an integrated circuit. The invention can also be implemented by a program code of software for implementing functions of the embodiment. In this case, a storage medium storing the program code is provided to a computer, and a processor provided in the computer reads the program code stored in the storage medium. In this case, the program code read from the storage medium implements the functions of the embodiments described above by itself, and the program code itself and the storage medium storing the program code constitute the invention. Examples of the storage medium for supplying such a program code include a flexible disk, a CD-ROM, a DVD-ROM, a hard disk, a solid state drive (SSD), an optical disk, a magneto-optical disk, a CD-R, a magnetic tape, a non-volatile memory card, and a ROM.

The program code for implementing the functions described in the embodiments can be implemented in a wide range of programs or script languages such as assembler, C/C++, Perl, Shell, PHP, Python, and Java.

Further, the program code of the software for implementing the functions in the embodiments may be distributed via a network to be stored in a storage unit such as a hard disk or a memory of a computer or a storage medium such as a CD-RW or a CD-R, and a processor provided in the computer may read and execute the program code stored in the storage unit or the storage medium.

Control lines and information lines considered to be necessary for description are shown in the embodiments described above, and not all control lines and information lines in a product are necessarily shown. All components may be connected to one another.

## Claims

1. A computer comprising:
a calculation device; and
a storage device connected to the calculation device, wherein
the computer
receives as an input a knowledge graph representing knowledge extracted from a document including a character string and an image and stores a model for reproducing the knowledge graph,
extracts, upon receiving a new document, knowledge from the new document,
generates the knowledge graph of the extracted knowledge as an extracted knowledge graph,
acquires a reproduced knowledge graph by inputting the extracted knowledge graph to the model,
calculates, based on a difference between the extracted knowledge graph and the reproduced knowledge graph, a difference degree representing a degree of difference of the extracted knowledge from the knowledge corresponding to the knowledge graph used for generating the model, and
outputs verification information including the difference degree.

2. The computer according to claim 1, wherein
the knowledge graph includes nodes representing entities constituting the knowledge and edges representing a relationship between the entities,
the nodes have features, and
the computer calculates the difference degree for each of the nodes of the extracted knowledge graph based on a difference between the feature of the node of the extracted knowledge graph and the feature of the node of the reproduced knowledge graph.

3. The computer according to claim 2, wherein
when the extracted knowledge graph includes the node to which characteristic information related to characteristics of the entity is assigned, the characteristic information is converted into the feature and assigned.

4. The computer according to claim 1, wherein
the computer is configured to access a database in which the knowledge graph having high reliability is stored, and
the model is generated using the knowledge graph stored in the database.

5. The computer according to claim 4, wherein
the extracted knowledge graph corrected by a user who refers to the verification information is stored in the database.

6. A knowledge extraction method to be performed by a computer, the computer including a calculation device and a storage device connected to the calculation device, and receiving as an input a knowledge graph representing knowledge extracted from a document including a character string and an image and storing a model for reproducing the knowledge graph, the knowledge extraction method comprising:
a first step of the computer extracting, upon receiving a new document, knowledge from the new document;
a second step of the computer generating the knowledge graph of the extracted knowledge as an extracted knowledge graph;
a third step of the computer acquiring a reproduced knowledge graph by inputting the extracted knowledge graph to the model;
a fourth step of the computer calculating, based on a difference between the extracted knowledge graph and the reproduced knowledge graph, a difference degree representing a degree of difference of the extracted knowledge from the knowledge corresponding to the knowledge graph used for generating the model; and
a fifth step of the computer outputting verification information including the difference degree.

7. The knowledge extraction method according to claim 6, wherein
the knowledge graph includes nodes representing entities constituting the knowledge and edges representing a relationship between the entities,
the nodes have features, and
the fourth step includes a step of the computer calculating the difference degree for each of the nodes of the extracted knowledge graph based on a difference between the feature of the node of the extracted knowledge graph and the feature of the node of the reproduced knowledge graph.

8. The knowledge extraction method according to claim 7, wherein
the third step includes a step in which, when the extracted knowledge graph includes the node to which characteristic information related to characteristics of the entity is assigned, the computer converts the characteristic information into the feature and assigns the feature.

9. The knowledge extraction method according to claim 6, wherein
the computer is configured to access a database in which the knowledge graph having high reliability is stored, and
the knowledge extraction method includes a step of the computer generating the model using the knowledge graph stored in the database.

10. The knowledge extraction method according to claim 9, further comprising:
a step of the computer storing the extracted knowledge graph corrected by a user who refers to the verification information in the database.
